# EUROPEAN PATENT SPECIFICATION

(11) **EP 1 507 385 B1**
(45) Date of publication and mention of the grant of the patent: **23.07.2008**
(21) Application number: 02724782.4
(22) Date of filing: 14.05.2002
(51) Int. Cl.: H04L 12/56, H04L 12/12

(54) **COMMUNICATION SPEED CONTROL CIRCUIT, COMMUNICATION SPEED CONTROL SUBSTRATE, AND INFORMATION PROCESSING APPARATUS**
KOMMUNIKATIONSGESCHWINDIGKEITS-STEUERSCHALTUNG, KOMMUNIKATIONSGESCHWINDIGKEITS-STEUERSUBSTRAT UND INFORMATIONSVERARBEITUNGSVORRICHTUNG
CIRCUIT DE COMMANDE DE VITESSE DE COMMUNICATION, SUBSTRAT DE COMMANDE DE VITESSE DE COMMUNICATION, ET APPAREIL DE TRAITEMENT D'INFORMATIONS

(43) Date of publication of application: 16.02.2005
(73) Proprietor: FUJITSU LIMITED, Kawasaki-shi, Kanagawa 211-8588 (JP)
(72) Inventor: KOJIMA, Teruki, c/o FUJITSU LIMITED, Kawasaki-shi, Kanagawa 211-8588 (JP)
(74) Representative: Sunderland, James Harry
(86) International application number: PCT/JP2002/004658
(87) International publication number: WO 2003/096651

(56) References cited:
- WO-A-98/09408
- WO-A-98/45996
- WO-A-99/54806
- JP-A- 9 116 590
- JP-A- 9 298 734
- JP-A- 10 013 485
- JP-A- 61 203 755
- JP-A- 2000 244 604
- US-A- 6 108 713

## Description

### Technical Field

The present invention relates generally to a circuit and a board for controlling a communication speed of data to be transmitted and received between an external communication device and an information processing device via a network and to the information processing device mounted with the same circuit and board, and more particularly to a technology contrived to reduce consumption of an electric current in a way that pays attention to a link speed and a circuit operation in a LAN (Local Area Network) system.

### Background Arts

In the LAN system, there has hitherto been known a technology (auto negotiation) of determining the communication speed by making negotiations between the external communication device and the information processing device (or a communication speed control circuit such as a chip, etc. and a communication speed control board such as a board, etc., which are mounted on the information processing device).

When the link speed (e.g., the highest link speed) was once established through the auto negotiation, the established link speed was not changed till the link became an OFF/ON state next time. In this respect, there was proposed a technology of actualizing a reduction in consumption of electric power of a LAN board by switching over the communication speed to the lowest speed just when a computer shifts to a power save mode (Japanese Patent Application Laid-Open Publication No.2001-154763).

### Disclosure of the Invention

In the conventional LAN system, a scheme of reducing the consumption of the electric power is done by switching over the communication speed to the slowest communication speed when the computer shifts to the power save mode, however, the established link speed does not change if there are no data that should be transmitted and received, if underrun occurs, and so forth. Therefore, a problem is that the consumption of the electric power can not be reduced.

It is an object of the present invention to reduce the consumption of the electric current by dynamically controlling a link speed and a circuit operation when judging that there are no data that should be transmitted and received, if the underrun occurs, and so forth.

To accomplish the above object, according to the present invention, a communication speed control circuit, provided between an external communication device and an information processing device, for controlling a communication speed of data to be transmitted and received via a network between the external communication device and the information processing device, comprises a communication speed determining unit for determining the communication speed of a communication with the external communication device, a judging unit for judging whether or not there are data that should be transmitted and received, and a communication unit for receiving, if the judging unit judges that there are no data that should be transmitted and received when transmitting and receiving the data to and from the external communication device at the communication speed determined by the communication speed determining unit, the data from the external communication device at a communication speed lower than the communication speed determined by the communication speed determining unit.

According to the present invention, when judging that there are no data that should be transmitted and received, it is possible to receive the data from the external communication device at the communication speed (e.g., 10 Mbps) lower than the present communication speed (e.g., 1 Gbps). Namely, when judging that there are no data that should be transmitted and received, the data are received at the low communication speed requiring less consumption of the electric current, and hence it follows that the reduction in consumption of the electric current can be attained.

In the communication speed control circuit described above, for example, the communication speed determining unit, if the judging unit judges that there are the data that should be transmitted and received, determines a communication speed higher than the low communication speed given above.

With this contrivance, even when the data are to be received at the low communication speed by the judgment that there are no data that should be transmitted and received, the data can be again transmitted and received at the previous communication speed.

In the communication speed control circuit described above, for instance, the judging unit judges that there are the data that should be transmitted and received when obtaining a data transmission request from the information processing device, and judges that there are no data that should be transmitted and received when obtaining none of the data transmission request within a predetermined period of time from the information processing device.

Owing to this.contrivance, if the data transmission request is not obtained within the predetermined period of time from the information processing device, the data can be received from the external communication device at the communication speed (e.g., 10 Mbps) lower than the present communication speed (e.g., 1 Gbps). Namely, if the data transmission request is not obtained within the predetermined period of time from the information processing device, the data are received at the low communication speed requiring less consumption of the electric current, and therefore it follows that the reduction in consumption of the electric current can be attained.

Further, to accomplish the above object, according to the present invention, a communication speed control circuit, provided between an external communication device and an information processing device, for controlling a communication speed of data to be transmitted and received via a network between the external communication device and the information processing device, comprises a communication speed determining unit for determining the communication speed of a communication with the external communication device, a counting unit for counting the number of times of underrun during a period of transmitting the data to the external communication device at the communication speed determined by the communication speed determining unit, a calculation unit for calculating an underrun occurrence rate on the basis of the number of times of the underrun that is counted by the counting unit, and a communication unit for transmitting and receiving the data to and from the external communication device at a communication speed lower than the communication speed determined by the communication speed determining unit if the occurrence rate calculated by the calculation unit becomes larger than a predetermined value when transmitting and receiving the data to and from the external communication device at the communication speed determined by the communication speed determining unit.

According to the present invention, if the underrun occurrence rate calculated by the calculation unit becomes larger than the predetermined value (e.g., 0.1% or 1%), the communication speed (e.g., 100 Mbps or 10 Mbps) lower than the present communication speed (e.g., 1 Gbps) is determined as the communication speed of the communication with the external communication device. That is, if the underrun occurrence rate calculated by the calculation unit becomes larger than the predetermined value, the data are transmitted and received at the low communication speed requiring less consumption of the electric current, and therefore it follows that the reduction in consumption of the electric current can be attained.

Moreover, to accomplish the above object, according to the present invention, a communication speed control circuit, provided between an external communication device and an information processing device, for controlling a communication speed of data to be transmitted and received via a network between the external communication device and the information processing device, comprises a communication speed determining unit for determining the communication speed of a communication with the external communication device, a timer unit for measuring a period of time for which there are no data that should be transmitted and received, and a communication unit for transmitting and receiving the data to and from the external communication device at a communication speed lower than the communication speed determined by the communication speed determining unit if the time measured by the timer count reaches a predetermined value.

According to the present invention, when judging that there are no data that should be transmitted and received for a fixed period of time, the data can be transmitted to and received from the external communication device at the communication speed (e.g., 10 Mbps) lower than the present communication speed (e.g., 1 Gbps). Namely, when judging that there are no data that should be transmitted and received for the fixed period of time, the data are transmitted and received at the low communication speed requiring less consumption of the electric current, and therefore it follows that the reduction in consumption of the electric current can be attained.

Note that the aforementioned communication speed control circuit may be mounted in an information processing device.

Prior art publication WO99/54806 to J. A. Foster, describes a power reduction algorithm for ethernet transceiver in which a driver inside a portable computer causes to check for a network link. If no network link is detected, the driver causes the Ethernet transceiver to power down for a specific period of time. The trigger for powering down is not dependent on the data to be transmitted and received.

Publication WO99/4599 to P. N. Kelly, relates to power savings in multiple technology physical layer device supporting autonegotiation. In such devices, parallel detection of connection for all receiver of all physical layers is performed by cycling the power supply to the receiver so that only only receiver at the time is on. This allows not avoid having all the receivers on continuously and thus to save power.

Publication WO98/0940 to J. L. Manguin et al. relates to an arrangement which allows to optimize a data transmission rate by adjusting delay intervals based on a size of a transmitted data packet and a desired transmission rate.

Publication US 6,108,713 to Sambamurthy et al. relates to a data transmission network architecture in which a media access controller is responsible for managing the flow of packet data through the transmit and receive multi-packet queue FIFOs throughout the system.

Publication JP9116590 to K. Seiji relates to a communication controller which reduces power consumption in a receiver circuit to a minimum every time a standby mode signal is received. In minimum power consumption mode it is still possible to detect a start bit. Upon receiving a start bit, the receiving circuit resumes normal power consumption.

Publication JP61203755 to M. Masanori describes a communication control equipment in which a counter is incremented at every detection of a run-down state. This also triggers a timer. A combination of counter and timer status is then used to switch to slow speed mode.

Publication JP2000244604 to Smith Kevin concerns a digital electronic data receiving circuit having two branches. Incoming signal comprises a preceding signal and a succeeding signal, each of which are attributed different data transfer speeds.

Publication JP9298734 to Shioyama Kenji relates to a video on demand system wherein the speed of transmission for the video stream may be changed depending on the level of storage of the video data in a buffer.

Publication JP10013485 to Sato Masahiko describes how a receiver in low speed mode switches to a high speed when a start bit is received.

The present invention can be specified by way of a communication speed control board as follows.

Firstly, a communication speed control board, provided between an external communication device and an information processing device, for controlling a communication speed of data to be transmitted and received via a network between the external communication device and the information processing device, comprises a communication speed determining unit for determining the communication speed of a communication with the external communication device, a judging unit for judging whether or not there are data that should be transmitted and received, and a communication unit for receiving, if the judging unit judges that there are no data that should be transmitted and received when transmitting and receiving the data to and from the external communication device at the communication speed determined by the communication speed determining unit, the data from the external communication device at a communication speed lower than the communication speed determined by the communication speed determining unit.

In the communication speed control board described above, for example, the communication speed determining unit, if the judging unit judges that there are the data that should be transmitted and received, determines a communication speed higher than the low communication speed.

In the communication speed control board, for instance, the judging unit judges that there are the data that should be transmitted and received when obtaining a data transmission request from the information processing device, and judges that there are no data that should be transmitted and received when obtaining none of the data transmission request within a predetermined period of time from the information processing device.

Secondly, a communication speed control board, provided between an external communication device and an information processing device, for controlling a communication speed of data to be transmitted and received via a network between the external communication device and the information processing device, comprises a communication speed determining unit for determining the communication speed of a communication with the external communication device, a counting unit for counting the number of times of underrun during a period of transmitting the data to the external communication device at the communication speed determined by the communication speed determining unit, a calculation unit for calculating an underrun occurrence rate on the basis of the number of times of the underrun that is counted by the counting unit, and a communication unit for transmitting and receiving the data to and from the external communication device at a communication speed lower than the communication speed determined by the communication speed determining unit if the occurrence rate calculated by the calculation unit becomes larger than a predetermined value when transmitting and receiving the data to and from the external communication device at the communication speed determined by the communication speed determining unit.

Thirdly, a communication speed control board, provided between an external communication device and an information processing device, for controlling a communication speed of data to be transmitted and received via a network between the external communication device and the information processing device, comprises a communication speed determining unit for determining the communication speed of a communication with the external communication device, a timer unit for measuring a period of time for which there are no data that should be transmitted and received, and a communication unit for transmitting and receiving the data to and from the external communication device at a communication speed lower than the communication speed determined by the communication speed determining unit if the time measured by the timer count reaches a predetermined value. Note that the communication speed control board described above may be mounted in an information processing device.

### Brief Description of the Drawings

FIG. 1 is an explanatory diagram showing an outline of an architecture of a LAN system to which a communication speed control circuit in a first embodiment of the present invention is applied;
FIG. 2 is an explanatory diagram showing a hardware architecture of the communication speed control circuit in the first embodiment of the present invention;
FIG. 3 is an explanatory flowchart showing operations of the LAN system to which the communication speed control circuit in the first embodiment of the present invention is applied;
FIG. 4 is an explanatory flowchart showing the operations of the LAN system to which the communication speed control circuit in the first embodiment of the present invention is applied;
FIG. 5 is an explanatory flowchart showing operations of the LAN system to which the communication speed control circuit in a second embodiment of the present invention is applied; and
FIG. 6 is an explanatory flowchart showing the operations of the LAN system to which the communication speed control circuit in a third embodiment of the present invention is applied.
Best Mode for Carrying out the Invention

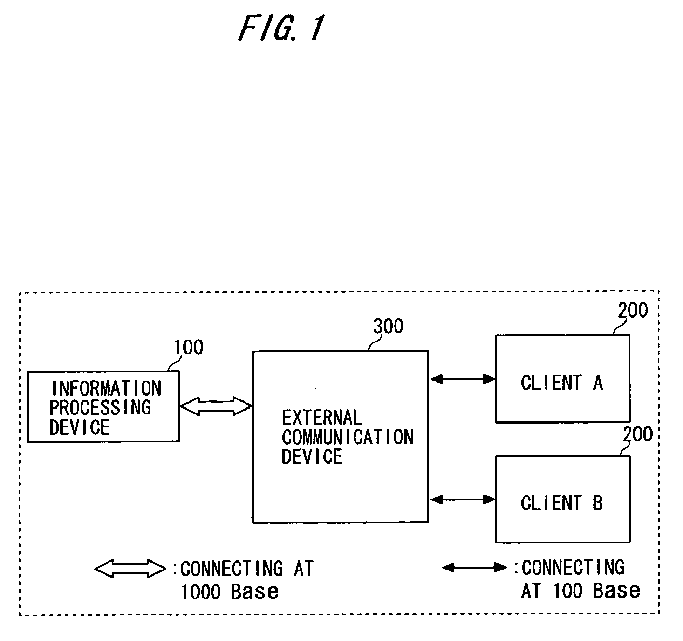

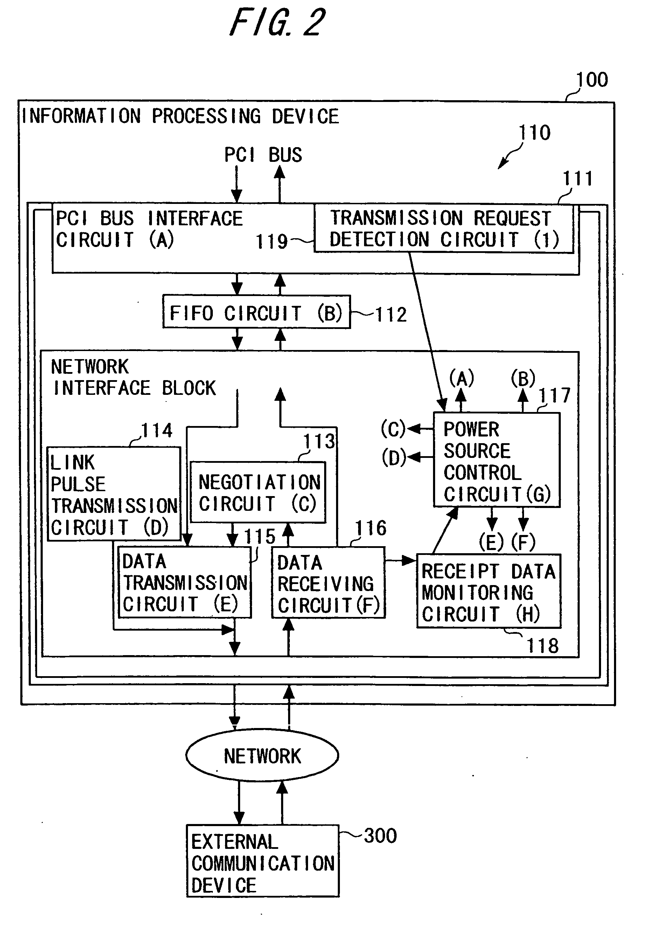

A LAN system, to which a communication speed control circuit in a first embodiment of the present invention is applied, will hereinafter be described with reference to the drawings. FIG. 1 is an explanatory diagram showing an outline of an architecture of the LAN system to which the communication speed control circuit in the present invention is applied. FIG. 2 is an explanatory diagram showing a hardware architecture of the communication speed control circuit in the present invention.

As shown in FIG. 1, the LAN system includes an information processing device 100 such as a server, etc., clients 200 such as personal computers, etc. and an external communication device 300 such as a switching HUB to which the server 100 and the clients 200 are connected in a way that forms a star type topology.

The information processing device 100 is the computer (the server, etc.) exhibiting comparatively high performance such as a workstation, etc., and includes a central processing unit (CPU), a storage device such as a hard disc device, etc., the communication control circuit 110 of the present invention, and so forth. The information processing device 100 further includes an input device such as a keyboard, a mouse, etc. and an image display device such as a CTR display, a liquid crystal display, etc. in some cases.

The communication speed control circuit 110 is a circuit (which is also called a chip) provided between the external communication device 300 and the information processing device 100 and serving to control a communication speed of data transmitted and received between the external communication device 300 and the information processing terminal 100 via a network such as LAN and so on.

The communication speed control circuit 110 includes a PCI (Peripheral Component Interconnect) bus interface circuit 111, a FIFO (First-in First-Out) circuit 112, a negotiation circuit 113, a link pulse transmission circuit 114, a data transmission circuit 115, a data receiving circuit 116, a power source control circuit 117, a receipt data monitoring circuit 118, a transmission request detection circuit 119 and so forth.

The PCI bus interface circuit 111 is a circuit for interfacing with a PCI bus in the information processing device 100. The PCI bus interface circuit 111 includes a CPU for controlling operations of the whole communication speed control circuit 110. The communication speed control circuit 110 transmits and receives the data to and from the information processing device 100 via the PCI bus interface circuit 111. The PCI bus interface circuit 111 includes the transmission request detection circuit 119.

The transmission request detection circuit 119 (a judging unit) functions as a judging unit (or a detection unit) for judging (or detecting) whether or not there are data that should be transmitted from the information processing device 100. The FIFO circuit 112 is a circuit functioning as a buffer.

The negotiation circuit 113 is a circuit (a communication speed determination unit) for determining a communication speed of a communication with the external communication device 300 from among a plurality of communication speeds (e.g., 1 Gbps, 100 Mbps, 10 Mbps). The negotiation circuit 113 determines the communication speed by negotiating with the external communication device 300. Note that the external communication device 300 also has the negotiation circuit 113, and hence normally the highest communication speed among the plurality of communication speeds is to be determined as the communication speed of the communication with the external communication device 300.

The link pulse transmission circuit 114 is constructed to, when a power source is switched ON, periodically transmit a fixed link pulse (the link pulse of 10 Mbps) onto the LAN.

The data transmission circuit 115 and the data receiving circuit 116 are circuits (communication units) for transmitting and receiving the data to and from the external communication device 300. The communication units 115, 116 normally transmit and receive the data to and from the external communication device 300 at the highest communication speed (e.g., 1 Gbps) determined by the negotiation circuit 113.

Note that when the transmission request detection circuit 119 (or the receipt data monitoring circuit 118) serving as the judging unit judges that there is no data that should be transmitted or received, the power source control circuit 117 determines a communication speed (e.g., 10 Mbps) lower than the communication speed (e.g., 1 Gbps) determined by the negotiation circuit 113. With this determination, the communication unit 116 can receive the data from the external communication device 300 at the lower communication speed than the communication speed determined by the negotiation circuit 113.

The power source control circuit 117 is a circuit mainly for performing ON/OFF control of the power source with respect to respective components that compose the communication speed control circuit 110. The components subjected to the power ON/OFF control by the power source control circuit 117 are, for example, the PCI bus interface circuit 111, the FIFO circuit 112, the negotiation circuit 113, the link pulse transmission circuit 114, the data transmission circuit 115 and the data receiving circuit 116. The receipt data monitoring circuit 118 is a circuit for monitoring whether a packet flowing across the LAN is self-addressed or not, and so forth. The receipt data monitoring circuit 118 (a judging unit) functions as a judging unit for judging whether or not there is data that should be received.

The client 200 is the personal computer, etc., and includes the central processing unit (CPU), the storage device such as the hard disc device, etc., the input device such as the keyboard, the mouse, a touch panel, etc., the image display device such as the CRT display, the liquid crystal display, etc., the communication device such as a LAN card, and so on.

The external communication device 300 is a relay device for receiving the packet flowing across the LAN, referring to a destination address of the received packet, and sending the packet from a port to which a terminal (such as the information processing terminal 100, the client 200, etc.) having this destination address is connected. For instance, the switching HUB can be used as the external communication device 300.

The external communication device 300 includes at least the negotiation circuit 113, the link pulse transmission circuit 114, the data transmission circuit 115, the data receiving circuit 116 and the receipt data monitoring circuit 118. These circuits are the same as those provided in the information processing terminal 100, and hence their explanations are omitted.

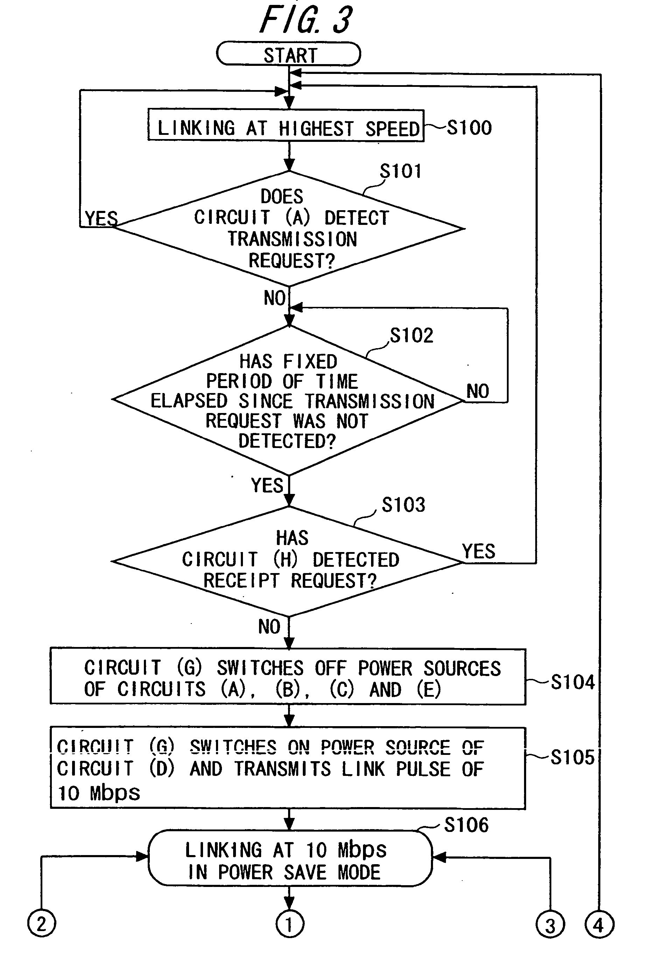

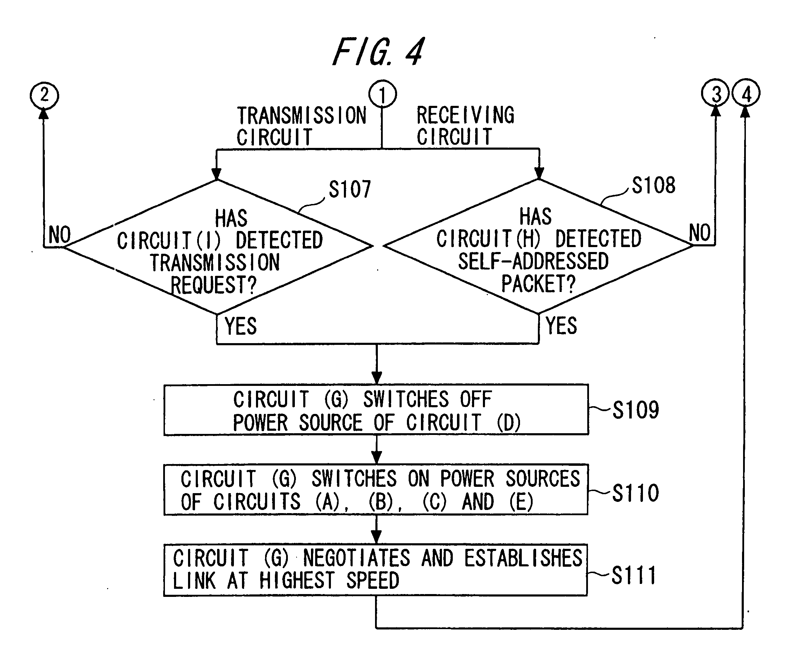

Next, the operations of the LAN system to which the communication speed control circuit in the first embodiment of the present invention is applied, will be explained with reference to the drawings. FIGS. 3 and 4 are explanatory flowcharts showing the operations of the LAN system to which the communication speed control circuit in the first embodiment of the present invention is applied.

Processes in these flowcharts are started when switching ON a power switch of the information processing device 100. Upon switching ON the power switch, the power source control circuit 117 supplies electric power to the negotiation circuit 113, etc.. The negotiation circuit 113 supplied with the electric power negotiates with the external communication device 300 via the LAN, thus determining the highest communication speed (e.g., 1 Gbps) as the communication speed of the communication with the external communication device 300 (S100). With this determination, the communication units 115, 116 of the communication speed control circuit 110 can transmit and receive the data to and from the external communication device 300 at the thus determined highest communication speed. Namely, the communication speed control circuit 110 establishes a link at the highest communication speed.

When the communication speed of the communication with the external communication device 300 is determined, the transmission request detection circuit 119 serving as the judging unit judges whether or not there is data that should be transmitted (e.g:, whether or not a data transmission request is acquired from the information processing device 100) (S101).

When judging that there is no data that should be transmitted (the data transmission request is not acquired from the information processing device 100) (S101: No), the PCI bus interface circuit 111 judges whether or not a fixed period of time has elapsed after acquiring the data transmission request last time (S102). When judging that the fixed period of time has elapsed (S102: Yes), the receipt data monitoring circuit 118 judges whether or not there is the data that should be received (for instance, whether a receipt request is detected or not) (S103). When judging that there is no data that should be received (for example, the receipt request is not detected) (S103: No), the power source control circuit 117 switches OFF the power sources of the PCI bus interface circuit 111, the FIFO circuit 112, the negotiation circuit 113 and the data transmission circuit 115 (S104).

Further, the power source control circuit 117, when the judging units 118 and 119 judge that there are no data that should be transmitted and received (S101: No, S103: No), determines a lower communication speed (10 Mbps) than the present communication speed (1 Gbps) as the communication speed of the communication with the external communication device 300. Incidentally, it is assumed that this low communication speed be preset.

Next, the power source control circuit 117 switches ON the power source of the link pulse transmission circuit 114. The link pulse transmission circuit 114, of which the power source has been switched ON, sends onto the LAN a link pulse (of 10 Mbps) indicating a lower communication speed than the present communication speed (S105). In response to this link pulse, the external communication device 300 determines 10 Mbps as the communication speed of the communication with the information processing device 100 (specifically the communication speed control circuit 110). With this determination, the communication unit 116 can receive the data from the external communication device 300 at the lower communication speed (10 Mbps) than the present communication speed (1 Gbps). Namely, the communication speed control circuit 110 establishes the link at the low communication speed.

As described above, when judging that there are no data that should be transmitted and received (S101: No, S103: No), it is possible to receive the data from the external communication device 300 at the lower communication speed (10 Mbps) than the present communication speed (1 Gbps). Namely, when judging that there are no data that should be transmitted and received (S101: No, S103: No), the data are received at the low communication speed requiring less consumption of the electric current, and hence it follows that a reduction in consumption of the electric current can be actualized.

Under a state of being possible of receiving the data at the low communication speed (10 Mbps) (S106), if the judging units 118 and 119 judge that there are the data that should be transmitted and received (e.g., the receipt data monitoring circuit 118 detects the receipt request) (S107: Yes, S108: Yes), the power source control circuit 117 switches OFF the power source of the link pulse transmission circuit 114 (S109). Further, the power source control circuit 117 switches ON the power sources of the PCI bus interface circuit 111, the FIFO circuit 112, the negotiation circuit 113 and the data transmission circuit 115 (S110).

The negotiation circuit 113 supplied with the electric power negotiates again with the external communication device 300 via the LAN, thus determining the higher (highest) communication speed (e.g., 1 Gbps) than the present low communication speed as the communication speed of the communication with the external communication device 300 (S111). With this determination, the communication units 115 and 116 of the communication speed control circuit 110 can transmit and receive the data to and from the external communication device 300 at the thus determined highest communication speed. Namely, the communication speed control circuit 110 establishes the link again at the highest communication speed.

Next, the LAN system to which the communication speed control circuit in a second embodiment of the present invention will be described.

The communication speed control circuit in the second embodiment is different from the communication speed control circuit 100 in the first embodiment in terms of further including a counting unit for counting the number of times of overrun (or underrun) and a calculation unit for calculating an occurrence rate of the underrun (or overrun). Other configurations are the same as those in the first embodiment, and therefore the explanation will be made by use of the same numerals and symbols.

The counting unit and the calculation unit are included in, e.g., the FIFO circuit 112. The counting unit counts the number of times of the underrun (or the overrun) with respect to the data that should be transmitted (or received) from the information processing device 100. If the underrun occurs, the FIFO buffer might be emptied. Namely, the underrun occurs when a speed of the data read from the FIFO circuit 112 and transmitted onto the LAN is higher than a speed of the data supplied from the information processing terminal 100 and accumulated in the FIFO circuit 112, and so on. If the overrun occurs, the data received via the LAN might overflows the FIFO buffer. To be specific, the overrun occurs when a speed of the data received via the LAN and accumulated in the FIFO circuit 112 is slower than a speed of the data read from the FIFO circuit 112 and supplied to the information processing terminal 100, and so on.

The calculation unit calculates the occurrence rate of the underrun (or the overrun) on the basis of the number of times of the underrun (or the overrun) that is counted by the counting unit and the data that should be transmitted (or received). Specifically, the underrun occurrence rate is calculated by (Number of Times of Underrun / Total Transmission Frame Count). The overrun occurrence rate is calculated by (Number of Times of Overrun / Total Receipt Frame Count).

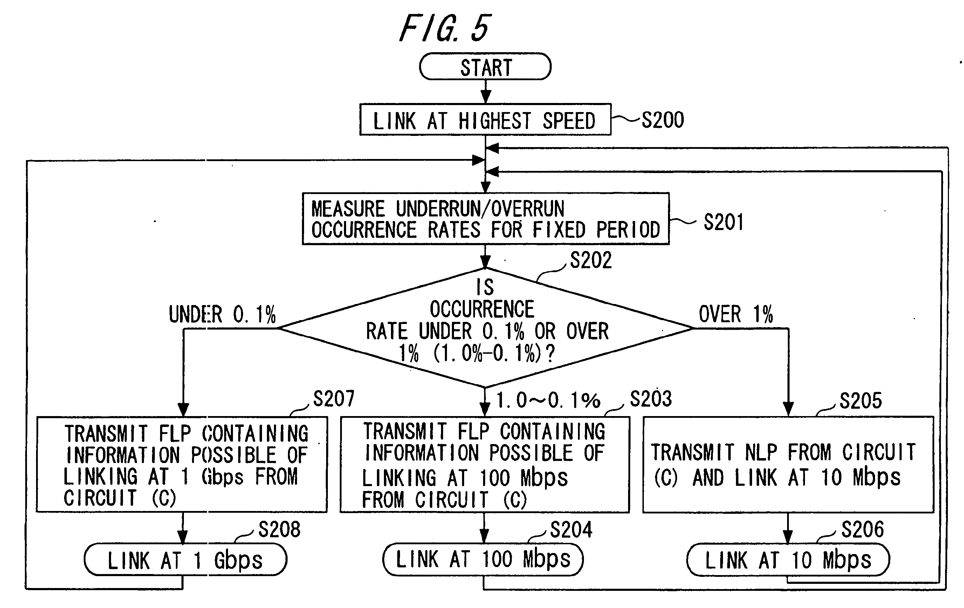

Next, the operations of the LAN system to which the communication speed control circuit in the second embodiment of the present invention is applied, will be explained with reference to the drawings. FIG. 5 is an explanatory flowchart showing the operations of the LAN system to which the communication speed control circuit in the second embodiment of the present invention is applied.

To start with, an operation of reducing the underrun occurrence rate will be explained. A process in this flowchart starts when switching ON the power switch of the information processing device 100. When the power switch is switched ON, the power source control circuit 117 supplies the electric power to the negotiation circuit 113, etc.. The negotiation circuit 113 supplied with the electric power negotiates with the external communication device 300 via the LAN, thus determining the highest communication speed (e.g., 1 Gbps) as the communication speed of the communication with the external communication device 300 (S200). With this determination, the communication units 115, 116 of the communication speed control circuit 110 can transmit and receive the data to and from the external communication device 300 at the thus determined highest communication speed. Namely, the communication speed control circuit 110 establishes the link at the highest communication speed.

The communication units 115, 116 transmit and receive the data to and from the external communication device 300 at the determined highest communication speed, during which period (a fixed period) the counting unit counts the number of times of the underrun. Then, the calculation unit calculates the underrun occurrence rate on the basis of the number of times of the underrun that is counted by the counting unit and the total transmission frame count (the data that should be transmitted) (S201).

If the occurrence rate calculated by the calculation unit becomes larger than a predetermined value of 0.1% or 1%, the negotiation circuit 113 negotiates with the external communication device 300 via the LAN, thereby determining a lower communication speed (100 Mbps or 10 Mbps) than the present communication speed (1 Gbps) as the communication speed of the communication with the external communication device 300 (S202).

To be specific, when the occurrence rate calculated by the calculation unit becomes larger than the predetermined value of 0.1%, the negotiation circuit 113 transmits FLP (Fast Link Pulse) containing information possible of linking at 100 Mbps onto the LAN (S203), and establishes the link at 100 Mbps (S204). The communication units 115, 116 are thereby capable of transmitting and receiving the data to and from the external communication device 300 at the lower communication speed (100 Mbps) than the present communication speed (1 Gbps).

On the other hand, when the occurrence rate calculated by the calculation unit becomes larger than the predetermined value of 1%, the negotiation circuit 113 transmits NLP (Normal Link Pulse) onto the LAN (S205), and establishes the link at 10 Mbps (S206). The communication units 115, 116 are thereby capable of transmitting and receiving the data to and from the external communication device 300 at the lower communication speed (10 Mbps) than the present communication speed (1 Gbps).

As described above, when the underrun occurrence rate calculated by the calculation unit becomes larger than the predetermined value (e.g., 0.1% or 1%), the lower communication speed (100 Mbps or 10 Mbps) than the present communication speed (1 Gbps) is determined as the communication speed of the communication with the external communication device 300. Namely, when the occurrence rate calculated by the calculation unit becomes larger than the predetermined value, the data are transmitted and received at the low communication speed requiring less consumption of the electric current, and hence it follows that the reduction in consumption of the electric current can be actualized.

Further, if the underrun occurs in the middle of the communication when performing the communication at the highest communication speed (1 Gbps), and if only a throughput equal to or smaller than 100 Mbps is given at all times (for example, in the case of replaying a video content via the network), there is no necessity of performing the communication at 1 Gbps. According to the second embodiment, performance of the PCI bus is invariably measured (the counting unit, the calculation unit), and the link speed is changed to a link speed deduced therefrom, thereby making it possible to reduce the consumption of the electric current while actualizing the maximum throughput at that time.

Next, an operation of decreasing the overrun occurrence rate will be described. The information processing device 100 transmits and receives the data to and from the external communication device 300 at the communication speed of 100 Mbps (S204), during which period (a fixed period) the number of times of the overrun is counted. Then, the calculation unit calculates the overrun occurrence rate on the basis of the number of times of the overrun that is counted by the counting unit and the total receipt frame count (the data that should be received) (S201).

If the occurrence rate calculated by the calculation unit becomes smaller than the predetermined value of 0.1%, the negotiation circuit 113 negotiates with the external communication device 300 via the LAN, thereby determining the highest communication speed (1 Gbps) as the communication speed of the communication with the external communication device 300 (S202).

To be specific, when the occurrence rate calculated by the calculation unit becomes smaller than the predetermined value of 0.1%, the negotiation circuit 113 transmits the FLP containing the information possible of linking at 1 Gbps onto the LAN (S207), and establishes the link at 1 Gbps (S208). The communication units 115, 116 are thereby capable of transmitting and receiving the data to and from the external communication device 300 at the communication speed (1 Gbps) higher than the present communication speed (100 Mbps).

This is also the same during a period for which the information processing device 100 transmits and receives the data to and from the external communication device 300 at the communication speed of 10 Mbps (S206). Namely, the information processing device 100 transmits and receives the data to and from the external communication device 300 at the communication speed of 10 Mbps, during which period (a fixed period) the counting units counts the number of times of the overrun. Then, the calculation unit calculates the overrun occurrence rate on the basis of the number of times of the overrun that is counted by the counting unit and the total receipt frame count (the data that should be received) (S201).

If the occurrence rate calculated by the calculation unit becomes smaller than the predetermined value of 0.1%, the negotiation circuit 113 transmits the FLP containing the information possible of linking at 1 Gbps onto the LAN (S207), and establishes the link at 1 Gbps (S208). The communication units 115, 116 are thereby capable of transmitting and receiving the data to and from the external communication device 300 at the communication speed (1 Gbps) higher than the present communication speed (10 Mbps).

On the other hand, when the occurrence rate calculated by the calculation unit becomes smaller than the predetermined value of 1% (but larger than 0.1%), the negotiation circuit 113 transmits the FLP containing the information possible of linking at 100 Mbps onto the LAN (S203), and establishes the link at 100 Mbps (S204). The communication units 115, 116 are thereby capable of transmitting and receiving the data to and from the external communication device 300 at the communication speed (100 Mbps) higher than the present communication speed (10 Mbps).

As described above, when the overrun occurrence rate calculated by the calculation unit becomes smaller than the predetermined value (e.g., 0.1%), the higher communication speed (100 Mbps or 1 Gbps) than the present communication speed is determined as the communication speed of the communication with the external communication device 300. Accordingly, the communication speed can be dynamically changed.

Next, the LAN system to which the communication speed control circuit in a third embodiment of the present invention will be described.

The communication speed control circuit in the third embodiment is different from the communication speed control circuit 100 in the first embodiment in terms of further including a timer unit for measuring a period of time for which the data that should be transmitted or received are existent or non-existent. Other configurations are the same as those in the first embodiment, and therefore the explanation will be made by use of the same numerals and symbols. The timer unit is included in, e.g., the FIFO circuit 112.

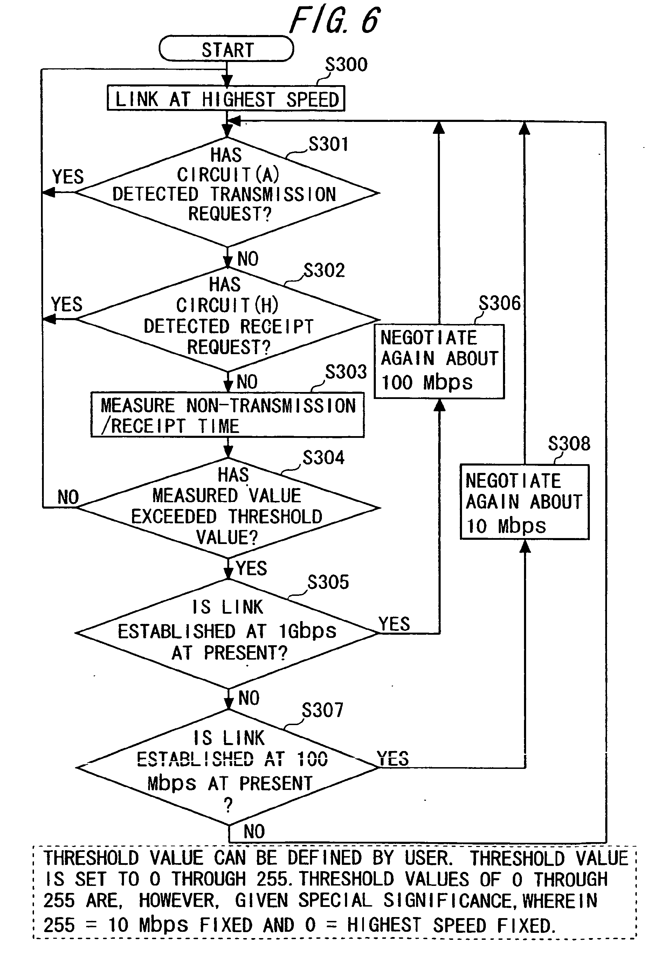

Next, the operations of the LAN system to which the communication speed control circuit in the third embodiment of the present invention is applied, will be explained with reference to the drawings. FIG. 6 is an explanatory flowchart showing the operations of the LAN system to which the communication speed control circuit in the third embodiment of the present invention is applied.

A process in this flowchart starts when switching ON the power switch of the information processing device 100. When the power switch is switched ON, the power source control circuit 117 supplies the electric power to the negotiation circuit 113, etc.. The negotiation circuit 113 supplied with the electric power negotiates with the external communication device 300 via the LAN, thus determining the highest communication speed (e.g., 1 Gbps) as the communication speed of the communication with the external communication device 300 (S300). With this determination, the communication units 115, 116 of the communication speed control circuit 110 can transmit and receive the data to and from the external communication device 300 at the thus determined highest communication speed. Namely, the communication speed control circuit 110 establishes the link at the highest communication speed.

When determining the communication speed of the communication with the external communication device 300, the transmission request detection circuit 119 as the judging unit judges whether or not there is the data that should be transmitted (e.g., whether or not the data transmission request is acquired from the information processing device 100) (S301).

When judging that there is no data that should be transmitted (the data transmission request is not acquired from the information processing device 100) (S301: No), the receipt data monitoring circuit 118 judges whether or not there is the data that should be received (for instance, whether the received data monitoring circuit 118 detect a receipt request or not) (S302). When judging that there is no data that should be received (for example, the receipt request is not detected) (S302: No), the timer unit measures a period of time for which there is no data that should be received (S303). When the time measured by the timer unit reaches a predetermined value, i.e., when the measured value exceeds a threshold value (S304: Yes), the PCI bus interface circuit 111 judges whether or not the present communication speed is 1 Gbps, i.e., whether not the link is now established at 1 Gbps (S305).

When judging that the present communication speed is 1 Gbps (S305: Yes), the negotiation circuit 113 negotiates with the external communication device 300 via the LAN (S306), thus determining the lower communication speed (100 Mbps) than the present communication speed (1 Gbps) as the communication speed of the communication with the external communication device 300. With this determination, the communication units 115, 116 can transmit and receive the data to and from the external communication device 300 at the lower communication speed (100 Mbps) than the present communication speed (1 Gbps).

While on the other hand, when judging that the present communication speed is not 1 Gbps (S305: No), the PCI bus interface circuit 111 judges whether or not the present communication speed is 100 Mbps, i.e., whether or not the link is now established at 100 Mbps (S307). When judging that the present communication speed is 100 Mbps (S307: Yes), the negotiation circuit 113 negotiates with the external communication device 300 via the LAN (S308), thus determining the lower communication speed (10 Mbps) than the present communication speed (100 Mbps) as the communication speed of the communication with the external communication device 300. With this determination, the communication units 115, 116 can transmit and receive the data to and from the external communication device 300 at the lower communication speed (10 Mbps) than the present communication speed (100 Mbps).

As explained above, when judging that there are no data that should be transmitted and received for the fixed period of time (S101: No, S103: No), the data are transmitted to and received from the external communication device 300 at the lower communication speed (10 Mbps) than the present communication speed (1 Gbps or 100 Mbps). Namely, when judging that there are no data that should be transmitted and received for the fixed period of time (S101: No, S103: No), the data are transmitted and received at the low communication speed requiring less consumption of the electric current, and hence it follows that a reduction in consumption of the electric current can be actualized.

Further, in the Giga-LAN system, the link is established at the mutually-utilizable maximum speed. When in a daily usage, however, there is a case where 10 Base is sufficient for the communications (such as performing MPG2 reproduction via the network). In such a case, if the communications are conducted at 1 Gbps, there is a long waiting time between the transmission and the receipt of the data.

According to the third embodiment, the link speed can be changed to the optimum link speed at any time so as to eliminate the waiting time, the consumption of the electric current can be reduced.

Note that the communication speed control circuit of the present invention may determine the communication speed corresponding to the performance of the PCI bus of the information processing terminal 100. For example, if it is judged as a result of measuring the performance of the PCI bus of the information processing terminal 100 that only the data, of which the data speed is equal to or lower than 10 Mbps, can be processed, the communication speed of the communication with the external communication device 300 may also be set to 10 Mbps. Moreover, the communication speed control circuit has been exemplified in the embodiments described above, however, as a matter of course, a communication speed control board is similarly applicable.

The present invention can be embodied in a variety of forms without deviating from the scope of the invention or the principal features thereof. Hence, the embodiments discussed above are merely exemplifications in every aspect and should not be construed limitedly.

The present invention is capable of actualizing the reduction in consumption of the electric current when judging that there are no data that should be transmitted and received and if the underrun occurs in the network such as the LAN, and so on. Further, the present invention is capable of reducing the consumption of the electric power while exhibiting the maximum network performance exhibitable at a certain point of time.

## Claims

1. A communication speed control circuit (110), provided in an information processing device (100), for controlling a communication speed of data to be transmitted and received via a network between an external communication device (300) and said information processing device, said communication speed control circuit comprising:
a communication speed determining unit (113) determining the communication speed of a communication with said external communication device;
a judging unit (119; 118)judging whether or not there are data that should be transmitted and received; and
a communication unit (114; 115) receiving, if said judging unit judges that there are no data that should be transmitted and received when transmitting and receiving the data to and from said external communication device at the communication speed determined by said communication speed determining unit, the data from said external communication device at a communication speed lower than the communication speed determined by said communication speed determining unit;
wherein said judging unit is adapted to judge that there are data that should be transmitted and received when obtaining a data transmission request from said information processing device, and judges that there are no data that should be transmitted and received when obtaining none of the data transmission request within a predetermined period of time from said information processing device.

2. A communication speed control circuit according to claim 1, wherein said communication speed determining unit, if said judging unit judges that there are the data that should be transmitted and received, determines a communication speed higher than the low communication speed.

3. A communication speed control circuit according to claim 1 or 2, wherein said communication speed determining unit, as an initial value of the communication speed, determines the highest communication speed of the communication with said external communication device by negociating with said external communication device.

4. A communication speed control circuit according to claim 1, further comprising a counting unit (112) counting the number of times of underrun during a period of transmitting the data to said external communication device at the communication speed determined by said communication speed determining unit; and
a calculation unit (112) calculating an underrun occurrence rate on the basis of the number of times of the underrun that is counted by said counting unit; and
wherein said communication unit transmitting and receiving the data to and from said external communication device at a communication speed lower than the communication speed determined by said communication speed determining unit if the occurrence rate calculated by said calculation unit becomes larger than a predetermined value when transmitting and receiving the data to and from said external communication device at the communication speed determined by said communication speed determining unit.

5. A communication speed control circuit according to claim 1, further comprising
a timer unit (112) measuring a period of time for which there are no data that should be transmitted and received;
wherein said communication unit transmitting and receiving the data to and from said external communication device at a communication speed lower than the communication speed determined by said communication speed determining unit if the time measured by said timer count reaches a predetermined value.

6. A communication speed control boardprovided with said communication speed control circuit according to any one of claims 1 through 5.

7. An information processing device mounted with said communication speed control circuit according to any one of claims 1 through 5.

8. An information processing device mounted with said communication speed control board according to claim 6.

9. A method for controlling a communication speed of data to be transmitted and received via a network between an external communication device and an information processing device, the method comprising:
determining the communication speed of a communication with said external communication device;
judging that data should be transmitted and received when obtaining a data transmission request from said information processing device;
judging that there are no data that should be transmitted and received when obtaining none of the data transmission request within a predetermined period of time from said information processing device
if said judging judges that there are no data that should be transmitted and received to and from said external communication device, receiving at the information processing device data from said external communication device at a communication speed lower than the communication speed determined by said communication speed determining unit.

10. A method according to claim 9, further comprising, if said judging judges that data should be transmitted and received to and from said external communication device, determining a communication speed higher than the lower communication speed.

11. A method according to claim 9 or claim 10, wherein said determining the communication speed of a communication with said external communication device, determines as an initial value of the communication speed the highest communication speed of the communication with said external communication device by negotiating with said external communication device.

## Patentansprüche

1. Eine Steuerschaltung (110) für eine Kommunikationsgeschwindigkeit, welche in einer Informationsverarbeitungsvorrichtung (100) vorgesehen ist, zum Steuern einer Kommunikationsgeschwindigkeit von Daten, welche über ein Netzwerk zwischen einer externen Kommunikationsvorrichtung (300) und der Informationsverarbeitungsvorrichtung gesendet und empfangen werden sollen, wobei die Steuerschaltung für eine Kommunikationsgeschwindigkeit umfasst:
eine Bestimmungseinheit (113) für eine Kommunikationsgeschwindigkeit, welche die Kommunikationsgeschwindigkeit einer Kommunikation mit der externen Kommunikationsvorrichtung bestimmt;
eine Beurteilungseinheit (119; 118), welche beurteilt, ob Daten vorhanden sind, welche gesendet oder empfangen werden sollen, oder nicht; und
eine Kommunikationseinheit (114; 115), welche, wenn die Beurteilungseinheit beurteilt, dass keine Daten vorhanden sind, die gesendet und empfangen werden sollen, wenn die Daten zu und von der externen Kommunikationsvorrichtung mit der Kommunikationsgeschwindigkeit gesendet und empfangen werden, welche durch die Bestimmungseinheit für eine Kommunikationsgeschwindigkeit bestimmt wird, die Daten von der externen Kommunikationsvorrichtung mit einer Kommunikationsgeschwindigkeit empfängt, die geringer ist als die Kommunikationsgeschwindigkeit, welche durch die Bestimmungseinheit für eine Kommunikationsgeschwindigkeit bestimmt wird;
wobei die Beurteilungseinheit eingerichtet ist, um zu beurteilen, dass Daten vorhanden sind, welche gesendet und empfangen werden sollen, wenn eine Datenübertragungsanforderung von der Informationsverarbeitungsvorrichtung erhalten wird, und beurteilt, dass keine Daten vorhanden sind, welche gesendet und empfangen werden sollen, wenn innerhalb einer vorbestimmten Zeitspanne keine Datenixbertragungsanforderung von der Informationsverarbeitungsvorrichtung erhalten wird.

2. Eine Steuerschaltung für eine Kommunikationsgeschwindigkeit nach Anspruch 1, wobei die Bestimmungseinheit für eine Kommunikationsgeschwindigkeit, wenn die Beurteilungseinheit beurteilt, dass die Daten vorhanden sind, welche gesendet und empfangen werden sollen, bestimmt, dass eine Kommunikationsgeschwindigkeit höher ist als die geringe Kommunikationsgeschwindigkeit.

3. Eine Steuerschaltung für eine Kommunikationsgeschwindigkeit nach Anspruch 1 oder 2, wobei die Bestimmungseinheit für eine Kommunikationsgeschwindigkeit, als einen Anfangswert der Kommunikationsgeschwindigkeit, die höchste Kommunikationsgeschwindigkeit der Kommunikation mit der externen Kommunikationsvorrichtung durch Verhandeln mit der externen Kommunikationsvorrichtung bestimmt.

4. Eine Steuerschaltung für eine Kommunikationsgeschwindigkeit nach Anspruch 1, des Weiteren umfassend eine Zähleinheit (112), welche die Häufigkeit eines Underrun während einer Periode eines Sendens der Daten an die externe Kommunikationsvorrichtung mit der Kommunikationsgeschwindigkeit zählt, die durch die Bestimmungseinheit für eine Kommunikationsgeschwindigkeit bestimmt wird; und
eine Berechnungseinheit (112), welche eine Underrun-Auftrittsrate basierend auf der Häufigkeit des Underrun berechnet, die durch die Zähleinheit gezählt wird; und
wobei die Kommunikationseinheit die Daten zu und von der externen Kommunikationsvorrichtung mit einer Kommunikationsgeschwindigkeit sendet und empfängt, die geringer ist als die Kommunikationsgeschwindigkeit, welche durch die Bestimmungseinheit für eine Kommunikationsgeschwindigkeit bestimmt wird, wenn die Auftrittsrate, welche durch die Berechnungseinheit berechnet wird, größer wird als ein vorbestimmter Wert, wenn die Daten zu und von der externen Kommunikationsvorrichtung mit der Kommunikationsgeschwindigkeit gesendet und empfangen werden, die durch die Bestimmungseinheit für eine Kommunikationsgeschwindigkeit bestimmt wird.

5. Eine Steuerschaltung für eine Kommunikationsgeschwindigkeit nach Anspruch 1, des weiteren umfassend:
eine Timereinheit (112), welche eine Zeitspanne misst, in welcher keine Daten vorhanden sind, die gesendet und empfangen werden sollen;
wobei die Kommunikationseinheit, welche die Daten zu und von der externen Kommunikationsvorrichtung mit einer Kommunikationsgeschwindigkeit sendet und empfängt, die geringer ist als die Kommunikationsgeschwindigkeit, welche durch die Bestimmungseinheit für eine Kommunikationsgeschwindigkeit bestimmt wird, wenn die Zeit, welche durch die Timerzählung gemessen wird, einen vorbestimmten Wert erreicht.

6. Eine Steuerplatine für eine Kommunikationsgeschwindigkeit, welche mit der Steuerschaltung für eine Kommunikationsgeschwindigkeit nach einem der Ansprüche 1 bis 5 ausgestattet ist.

7. Eine Informationsverarbeitungsvorrichtung, welche mit der Steuerschaltung für eine Kommunikationsgeschwindigkeit nach einem der Ansprüche 1 bis 5 bestückt ist.

8. Eine Informationsverarbeitungsvorrichtung, welche mit der Steuerplatine für eine Kommunikationsgeschwindigkeit nach Anspruch 6 bestückt ist.

9. Ein Verfahren zum Steuern einer Kommunikationsgeschwindigkeit von Daten, die über ein Netzwerk zwischen einer externen Kommunikationsvorrichtung und einer Informationsverarbeitungsvorrichtung gesendet und empfangen werden sollen, wobei das Verfahren umfasst:
Bestimmen der Kommunikationsgeschwindigkeit einer Kommunikation mit der externen Kommunikationsvorrichtung;
Beurteilen, dass Daten gesendet und empfangen werden sollen, wenn eine Datenübertragungsanforderung von der Informationsverarbeitungsvorrichtung erhalten wird;
Beurteilen, dass keine Daten vorhanden sind, die gesendet und empfangen werden sollen, wenn innerhalb einer vorbestimmten Zeitspanne von der Informationsverarbeitungsvorrichtung keine Datenübertragungsanforderung erhalten wird,
wenn die Beurteilung beurteilt, dass keine Daten vorhanden sind, welche zu und von der externen Kommunikationsvorrichtung gesendet und empfangen werden sollen, Empfangen von Daten an der Informationsverarbeitungsvorrichtung von der externen Kommunikationsvorrichtung mit einer Kommunikationsgeschwindigkeit, die geringer ist als die Kommunikationsgeschwindigkeit, welche durch die Bestimmungseinheit für eine Kommunikationsgeschwindigkeit bestimmt wird.

10. Ein Verfahren nach Anspruch 9, des Weiteren umfassend, wenn die Beurteilung beurteilt, dass Daten zu und von der externen Kommunikationsvorrichtung gesendet und empfangen werden sollen, Bestimmen einer Kommunikationsgeschwindigkeit, die höher ist als die geringere Kommunikationsgeschwindigkeit.

11. Ein Verfahren nach Anspruch 9 oder Anspruch 10, wobei das Bestimmen der Kommunikationsgeschwindigkeit einer Kommunikation mit der externen Kommunikationsvorrichtung als einen Anfangswert der Kommunikationsgeschwindigkeit die höchste Kommunikationsgeschwindigkeit der Kommunikation mit der externen Kommunikationsvorrichtung bestimmt, durch Verhandeln mit der externen Kommunikationsvorrichtung.

## Revendications

1. Circuit de contrôle de vitesse de communication (110) mis à disposition dans un appareil de traitement d'informations (100) pour contrôler une vitesse de communication de données à être transmises et reçues à travers un réseau entre un appareil de communication externe (300) et ledit appareil de traitement d'informations , ledit circuit de contrôle de vitesse de communication comprenant :
une unité de détection de vitesse de communication (113) déterminant la vitesse de communication d'une communication avec ledit appareil de communication externe ;
une unité d'évaluation (119, 118) évaluant si oui ou non il y a des données à être transmises et reçues ; et
une unité de communication (114, 115) recevant, si ladite unité d'évaluation évalue qu'il n'y a pas de données à être transmises et reçues quand des données sont transmises et reçues vers et à partir dudit appareil de communication externe à la vitesse de communication déterminée par ladite unité de détection de vitesse de communication, les données dudit appareil de communication externe à une vitesse de communication inférieure à la vitesse de communication déterminée par ladite unité de détection de vitesse de communication ;
dans lequel ladite unité d'évaluation est adaptée à évaluer qu'il y a des données devant être transmises et reçues quand une requête de transmission de données est obtenue dudit appareil de traitement d'informations, et à évaluer qu'il n'y a pas de données qui devraient être transmises et reçues si aucune part de la requête de transmission de données n'est reçue de ladite unité de détection de vitesse de communication en l'espace d'un délai prédéterminé.

2. Circuit de contrôle de vitesse de communication de la revendication 1 dans lequel ladite unité de détection de vitesse de communication, si ladite unité d'évaluation évalue qu'il n'y a pas de données à être transmises et reçues, détermine une vitesse de communication supérieure à la vitesse de communication basse.

3. Circuit de contrôle de vitesse de communication des revendications 1 et 2 dans lequel ladite unité de détection de vitesse de communication, comme valeur initiale de vitesse de communication, détermine la vitesse de communication la plus élevée de la communication avec ledit appareil de communication externe en négociant avec ledit appareil de communication externe.

4. Circuit de contrôle de vitesse de communication de la revendication 1 comprenant en plus un compteur (112) comptant le nombre d'occurrences de sous-charges de contenu pendant une période de transmission de données vers ledit appareil de communication externe à la vitesse de communication déterminée par ladite unité de détection de vitesse de communication ; et
une unité de calcul (112) calculant un taux d'occurrence de sous-charges de contenu basé sur le nombre d'occurrences de sous-charge de contenu compté par ledit compteur ; et
dans lequel ladite unité de communication transmettant et recevant les données vers et à partir dudit appareil de communication externe à une vitesse de communication inférieure à la vitesse de communication déterminée par ladite unité de détection de vitesse de communication si le taux d'occurrence calculé par ladite unité de calcul devient supérieur à une valeur prédéterminée quand les données sont transmises et reçues vers et à partir dudit appareil de communication externe à la vitesse de communication déterminée par ladite unité de détection de vitesse de communication.

5. Circuit de contrôle de vitesse de communication de la revendication 1 comprenant en plus
une unité de registre d'horloge mesurant une période de temps pendant lequel aucunes données ne devraient être transmises ou reçues ;
dans lequel ladite unité de communication transmettant et recevant les données vers et à partir dudit appareil de communication externe à une vitesse de communication inférieure à la vitesse de communication déterminée par ladite unité de détection de vitesse de communication si la période de temps mesurée par ladite unité de registre d'horloge atteint une valeur prédéterminée.

6. Carte de contrôle de vitesse de communication munie dudit circuit de contrôle de vitesse de communication d'une des revendications 1 à 5.

7. Appareil de traitement d'informations muni dudit circuit de contrôle de vitesse de communication d'une des revendications 1 à 5.

8. Appareil de traitement d'informations muni de ladite carte de contrôle de vitesse de communication de la revendication 6.

9. Procédé pour contrôler une vitesse de communication de données à être transmises et reçues à travers un réseau entre un appareil de communication externe et un appareil de traitement d'informations, le procédé comprenant :
détection de la vitesse de communication d'une communication avec ledit appareil de communication externe ;
évaluation que les données devraient être transmises et reçues quand une demande de transmission de données est reçue de dudit appareil de traitement d'informations ;
évaluation qu'il n'y a pas de données qui devraient être transmises et reçues quand aucune part de la requête de transmission de données n'est reçue dudit appareil de traitement de données en l'espace d'un délai prédéterminé
si ladite évaluation évalue qu'il n'y a pas de données à être transmises et reçues dudit appareil de communication externe, recevant à l'appareil de traitement d'information des données dudit appareil de communication externe à une vitesse de communication inférieure à la vitesse de communication déterminée par ladite unité de détection de vitesse de communication.

10. Procédé de la revendication 9 comprenant en plus, si ladite évaluation évalue que des données devraient être transmises et reçues vers et à partir dudit appareil de communication externe, détermination d'une vitesse de communication supérieure à la vitesse de communication plus basse.

11. Procédé des revendications 9 ou 10 dans lequel ladite détermination de vitesse de communication d'une communication avec ledit appareil de communication externe détermine comme valeur initiale de la vitesse de communication la vitesse de communication la plus élevée de la communication avec ledit appareil de communication externe en négociant avec ledit appareil de communication externe.
